Europäisches Patentamt

European Patent Office

Office européen des brevets

(19)

(11) Publication number: **0 405 317 A2**

# EUROPEAN PATENT APPLICATION

(21) Application number: 90111668.1

(22) Date of filing: 20.06.90

(51) Int. Cl.5: **C08J 3/03**, C08J 3/26, C09D 5/02, //C08L51:00

(30) Priority: 20.06.89 JP 158035/89

(43) Date of publication of application:
02.01.91 Bulletin 91/01

(84) Designated Contracting States:
DE FR GB NL SE

(71) Applicant: NIPPON PAINT CO., LTD.
2-1-2, Oyodokita Kita-ku
Osaka-shi Osaka-fu(JP)

(72) Inventor: Noda, Hideyoshi
7-9, Kitashowa-cho
Nishinomiya-shi, Hyogo(JP)
Inventor: Yoshikawa, Motoyoshi
11-33, Eiwa-cho
Yamatotakada-shi, Nara(JP)

(74) Representative: Hansen, Bernd, Dr.
Dipl.-Chem. et al
Hoffmann, Eitle & Partner Patent- und
Rechtsanwälte Arabellastrasse 4e 4
D-8000 München 81(DE)

(54) **Production of thermally stable aqueous resin dispersion and a water borne coating composition therefrom.**

(57) Disclosed is a process for preparing a heat-stable aqueous resin dispersion in which gelled resin particles are stably dispersed in an aqueous medium, by heating a mixture of a specific graft resin as claimed and curing agent to a curing agent or more. The aqueous resin dispersion is combined with an amino resin to form a water-borne coating composition which is excellent in storage stability and coating appearance.

EP 0 405 317 A2

Xerox Copy Centre

# PRODUCTION OF THERMALLY STABLE AQUEOUS RESIN DISPERSION AND A WATER BORNE COATING COMPOSITION THEREFROM

## FIELD OF THE INVENTION

The present invention relates to a process for preparing a thermally stable aqueous resin dispersion, an aqueous resin dispersion prepared thereby and a water-borne coating composition containing the aqueous resin dispersion.

## BACKGROUND OF THE INVENTION

Water-borne coating compositions are intensively studied in this field, because they are very useful in view of avoiding fire risk and avoiding use of an organic solvent which is expensive and harmful.

The water-borne coating compositions generally employ a dispersant for dispersing a resin. It is proposed that the dispersant is a graft polymer which has both a hydrophobic portion and a hydrophilic portion. The graft polymer has a good dispersibility, but, where a material to be dispersed is thermosetting, the dispersion is not always thermally stable. In order to enhance thermal stability, it is proposed that a molecular weight or glass transition temperature of the material to be dispersed is made higher. But they are some drawbacks in dispersibility or producibility.

## SUMMARY OF THE INVENTION

The present invention provides a process for preparing a thermally stable aqueous resin dispersion in which gelled resin particles are stably dispersed in an aqueous medium, and a water-borne coating composition containing it. The process of the present invention comprises;
forming a resin mixture of a graft polymer and a curing agent, wherein said graft polymer has a branch chain with a molecular weight of 1,000 to 4,000 and a principal chain, and has a total number average molecular weight of 5,000 to 100,000, one of the branch chain and the principal chain is hydrophobic and has a solubility parameter of 8.0 to 11.5, and the other of the branch chain and the principal chain is hydrophilic and has a solubility parameter of 10.0 to 13.0, and the solubility parameters have an absolute difference therebetween of at least 1, and, when the graft polymer is mixed in the aqueous medium, the resultant mixture has an integrating sphere turbidity of not more than 50 degree (kaoline) at a concentration of 10 to 70 % by weight and at a viscosity of 50 to 10,000 cps, and
heating said resin mixture to a curing temperature or more with stirring.

The present invention also provides the aqueous resin dispersion prepared thereby.

The present invention further provides a water-borne coating composition containing the above obtained aqueous resin dispersion.

## DETAILED DESCRIPTION OF THE INVENTION

The graft polymer of the present invention has a hydrophilic portion and a hydrophobic portion. Generally, the hydrophobic portion has a relatively low solubility parameter (SP) value and the hydrophilic portion has a relatively high SP value. It is required that the absolute value of the difference between both solubility parameter (SP) values is at least 1.0. The difference of the solubility parameter (SP) values enhances water dispersibility. In the present invention, the hydrophobic portion has a solubility parameter (SP) of 8.0 to 11.5 and the hydrophilic portion has a solubility parameter (SP) of 10.0 to 13.0. The hydrophobic or hydrophilic portion may be either a principal chain or a graft chain. In other words, if the principal chain is hydrophilic, the graft chain shall be hydrophobic, and if the principal chain is hydrophobic, then the graft chain shall be hydrophilic.

The graft polymer can be prepared by methods known to the art. For example, it may be prepared by adding an unsaturated glycidyl monomer to an acryl polymer having an acid group to form an acryl polymer having an unsaturated double bond, which is then polymerized with other polymerizable monomers. The acid group of the acryl polymer may be introduced by using acrylic acid or methacrylic acid as a monomer. Also, the introduction of the acid group may be carried out by a method wherein a polymerization reaction is conducted in the presence of a chain transfer agent, such as thioglycol, etc., or by a method wherein a polymerization reaction is conducted using a polymerization initiator having a terminal acid group. Typical examples of the monomers which are used both for the preparation of the acryl polymer and for grafting, provided that the term "-(meth)acryl" herein includes both acryl and methacryl, are (meth)acryl esters, such as methyl (meth)acrylate, ethyl (meth)acrylate, propyl (meth)-acrylate, isopropyl (meth)acrylate, butyl (meth)-acrylate, hexyl (meth)acrylate, octyl (meth)acrylate, lauryl (meth)acrylate, methoxybutyl (meth)acrylate, methoxyethyl (meth)acrylate, ethoxybutyl (meth)-acrylate, allyl (meth)acrylate, hydroxyethyl (meth)-acrylate, hydroxypropyl (meth)acrylate, diethylaminoethyl (meth)acrylate, methylaminoethyl (meth)acrylate and allyloxyethyl (meth)acrylate; (meth)acrylamide, such as N-methylol (meth)-acrylamide and N-alkoxymethylol (meth)acrylamide (e.g. N-isobutoxymethylol (meth)acrylamide etc.); vinyl aromatic compounds, such as styrene, alpha-methylstyrene, vinyltoluene, gamma-chlorostyrene and vinylpyridine; polyolefin compounds, such as butadiene, isoprene and chloroprene; others, such as acrylonitrile, methacrylonitrile, methyl isopropenyl ketone; and the like. Typical examples of the unsaturated glycidyl monomers are glycidyl (meth)acrylate and the like. According to the selection of the monomers, each portion of the graft polymer is made hydrophobic or hydrophilic.

The graft polymer has a number average molecular weight of 5,000 to 100,000, preferably 5,000 to 50,000, in which the graft chain has a number average molecular weight of 1,000 to 4,000. The molecular weight is determined by gel permeation chromatography (GPC).

The solubility parameter (SP) is determined with the following formula of K.SUH, J.M. CORBETT; Journal of Applied Polymer Science, 12 , 2359('68):

$$SP = (\sqrt{Vml} \cdot \delta ml + \sqrt{Vml} \cdot \delta mh)/(\sqrt{Vml} + \sqrt{Vmh})$$

wherein ml shows a low SP solvent, mh shows a high SP solvent, $\delta$ shows a solubility parameter and V shows a molecular volume at turbidimetric point.

The graft polymer is changed to a water dispersible one by neutralizing acid groups in the polymer with basic materials. Typical examples of the basic materials are monomethylamine, dimethylamine, trimethylamine, monoethylamine, triethylamine, monoisopropylamine, diisopropylamine, diethylenetriamine, triethylenetetramine, monoethanolamine, diethanolamine, triethanolamine, monoisopropanolamine, diisopropanolamine, dimethylethanolamine, morpholine, piperadine, ammonia, sodium hydroxide, potassium hydroxide, lithium hydroxide and the like.

According to the present invention, when the nuetralized graft polymer is dispersed in an aqueous medium to form a water dispersion having a concentration of 10 to 70 % by weight and a viscosity of 50 to 10,000 cps, the dispersion has an integrating sphere turbidity of not more than 50 degree (kaoline). The integrating sphere turbidity is determined according to JIS K 0101-1979 and expressed as "degree (kaoline)". That is, the integrating sphere turbidity is determined from a calibration curve which has been calibrated using a kaolin standard solution, and the ratio of the intensity of light scattered by particles in water and the intensity of transmitted light.

The above mentioned graft polymer is combined with a curing agent in an aqueous medium to form a resin mixture, which is then heated to a curing temperature or more to form the aqueous resin dispersion of the present invention. The resin mixture may further contain a water-insoluble resin.

The water-insoluble resin is known to the art. The resin may be preferably a resin whose solubility parameter is different from that of the hydrophobic portion of the graft polymer by not more than 2 in absolute value, and which has an acid value of not more than 20. The water-insoluble resin has a function of reducing the hot melt viscosity of the graft polymer. Preferably, it has a number average molecular weight of 3,000 to 10,000. If the difference of solubility parameter between the water-insoluble resin and the hydrophobic portion of the graft polymer is more than 2, the obtained coating composition becomes turbid to reduce brightness and transparency. If it has an acid value more than 20, dispersion stability and circulation stability are poor. An amount of the water-insoluble resin is 5 to 100 parts by weight, preferably 5 to 50 parts by weight based on 100 parts by weight of the graft polymer. Amounts of more than 100 parts by weight reduce dispersion stability to result in precipitation problems or poor appearance of a cured film, especially poor transparency. The water-insoluble resin can be formulated into the resin mixture by a mixer.

The curing agent of the present invention are reactive with at least one of resin components which are present in the aqueous resin dispersion, i.e. the above mentioned graft polymer, the aqueous resin or the water-insoluble resin. If the resin mixture only contains the graft polymer and the curing agent, the curing agent should be reactive with the graft polymer. If the resin mixture contains the water-insoluble resin in addition to the graft polymer and the curing agent, the curing agent may be reactive with the water-insoluble resin. The curing agent shall be selected based on what reactive groups are present on the resin components. For example, if hydroxyl groups are present in the resin components, the curing agent would be a melamine resin or a blocked isocyanate resin. If amino groups are the reactive groups on the resin components, the curing agent would be an epoxy resin. It is preferred that the melamine resin which is a preferred curing agent has a number average molecular weight of 5,000 or less and contains $-NCH_2OH$ group in an amount of at least 0.4 equivalent based on one equivalent of triazine ring. The blocked isocyanate resin can be prepared by blocking isocyanate groups in an isocyanate group-containing resin with oximes, alcohols and the like.

The blocked isocyanate resin preferably has a molecular weight of 5,000 or less. The epoxy resin is a compound which has at least one epoxy group and a molecular weight of 5,000 or less.

The above mentioned resins and curing agent are heated to a curing temperature or more with stirring in an aqueous medium. The aqueous medium is primarily water, but other solvents, such as polyhydric alcohols or a derivative thereof, and amine compounds may be contained in a small amount. The curing temperature is decided by a combination of the curing agent and the resin components, but generally selected within the range of room temperature to about 100 °C because the reaction occurs in aqueous medium. In the present invention, the resin mixture is heated to the curing temperature or more. If it is less than curing temperature, so-called hot blend, the obtained dispersion has poor thermal stability and often arises precipitation problems. If precipitation occurs, it is very difficult to uniformly disperse again. Curing time is varied by reaction rate or other factors, but generally within the range of from 30 minutes to 24 hours. If the reaction rate is too fast, the mixture would be viscous. Accordingly, it is preferred that curing reactions are controlled by slightly reducing temperature or by diluting concentration. The curing agent may be employed in a resin / curing agent weight ratio of 95/5 to 50/50. This curing reaction produces gelled resin particles in the system. Gelation is generally evaluated by gel content. In the present invention, "gel content" is measured as follow: The obtained dispersion is freeze-dried and 5 g of the dried material is put in a Soxhlet extractor and extracted with acetone for 3 hours. A weight of the remaining material is divided by 5 g to obtain a quotient which expresses as gel content. It is preferred that a gel content of the aqueous dispersion of the present invention is 90 % or less. It should be noted that the gel content of all aqueous resin dispersions can not be determined. It is believed that, if gelled particles is very small, a gel content can not be determined.

The aqueous resin dispersion of the present invention is generally combined with an amino resin to form a thermosetting water-borne coating composition. Examples of the amino resins are an alkoxylized melamine-formaldehyde resin, i.e. an alkoxylized condensate of melamine with formaldehyde or paraformaldehyde, such as methoxylated methylolmelamine, isobutoxylated methylolmelamine, n-butoxylated methylolmelamine; and the like. The amino resin may be present in the coating composition in an amount of 5 to 50 % by weight, preferably 20 to 40 % by weight.

The water borne coating composition may contain an aqueous resin. The term "aqueous resin" herein means water soluble or water dispersible.

The aqueous resin is known to the art, but preferably is selected such that the absolute value of the difference between the solubility parameter of the aqueous resin and that of the hydrophilic portion of the graft polymer is not more than 2.0. If the difference is more 2.0, cured coatings become dull, and brightness and transparency of the coatings decline. It is preferred that the aqueous resin has a surface tension of not more than 51 dyne/cm when it is mixed in water to form a 1 wt % aqueous solution. It is also preferred that the aqueous resin has a water-tolerance of at least 4, provided that the water-tolerance is expressed by the number of fold dilutions made by adding deionized water to a 100 ml beaker containing a water-borne varnish of the aqueous resin having a solid content of 5 g until one can not read a No. 1 type letter through the beaker. Water-tolerances of less than 4 increase the viscosity of the composition and lower dispersion stability. Surface tensions of more than 51 dyne/cm are not preferred because of increased viscosity and poor dispersion stability. The aqueous resin can be one which meets the above mentioned physical properties, for example, an alkyd resin, a polyester resin, an acryl resin, a urethane resin, an aminoplast resin, a maleic resin and the like.

The water-borne coating composition may further contain other solvents, color pigments, dyes, extenders and the like, if necessary. Metal powder may also be formulated therein. Other additives, such as defoaming agents, leveling agents, UV absorbers and antioxidants may further be added in the coating composition.

The water-borne coating composition of the present invention is excellent in thermal stability and coating workability. It is very preferred for electrocoating.

EXAMPLES

The present invention is illustrated by the following examples which are not construed as limiting the present invention to their details.

Production Example 1

Preparation of a graft polymer (i)

A one liter reaction vessel equipped with a stirrer, a temperature controlling device and a condenser was charged with 400 parts by weight of xylene and heated to 120 °C with stirring. A mixture of 73.6 parts by weight of styrene, 151.6 parts by weight of methyl methacrylate, 100.8 parts by weight of ethylhexyl acrylate, 74.4 parts by weight of 2-hydroxyethyl methacrylate, 40 parts by weight of an initiator (Kaya Ester O available from Kayaku Nuly Company) and 17.2 parts by weight of methacrylic acid was added dropwise for 3 hours and mixing was continued for another 2 hours. Next, 0.1 part by weight of hydroquinone and 17.0 parts by weight of glycidyl methacrylate were were added to the obtained resin solution and mixed at 140 °C for 3 hours to obtain a hydrophobic oligomer having an acid value of 3.0, a number average molecular weight of 2,500, an SP value of 10.3 and a nonvolatile content of 50 %.

The same type of reaction vessel as used above was charged with 45 parts by weight of butyl diglycol and heated to 120 °C with stirring. To the reaction vessel, a mixture of 400 parts by weight of the above hydrophobic oligomer, 31.3 parts by weight of styrene, 61.2 parts by weight of methyl methacrylate, 56.0 parts by weight of ethylhexyl acrylate, 33.1 parts by weight of hydroxyethyl acrylate, 18.4 parts by weight of methacrylic acid and 14 parts by weight of Kaya Ester O was added dropwise for 3 hours to polymerize, and mixing was continued. Xylene was removed by distillation under a reduced pressure to obtain a graft polymer solution having a nonvolatile content 87 %. The graft polymer had a number average molecular weight of 8,000, an acid value of 33, an hydroxyl value of 76, a ratio of hydrophobic portion / hydrophilic potion of 50/50 and a hydrophilic portion SP value of 11.9. The graft polymer was neutralized 100 % with dimethylethanolamine and diluted with water up to a nonvolatile content of 27 %. The obtained aqueous solution has a viscosity of 500 cps and a turbidity of 3 degree (kaoline).

Production Example 2

Preparation of a graft polymer (ii)

The same type of reaction vessel as Production Example 1 was charged with 400 parts by weight of xylene and heated to 120 °C with stirring. A mixture of 121.6 parts by weight of ethylhexyl methacrylate, 110.0 parts by weight of lauryl methacrylate, 94.0 parts by weight of t-butyl methacrylate, 74.4 parts by weight of 2-hydroxyethyl methacrylate, 40 parts by weight of Kaya Ester O and 17.2 parts by weight of methacrylic acid was added dropwise for 3 hours and mixing was continued for another 2 hours. Next, 0.1 part by weight of hydroquinone and 17.0 parts by weight of glycidyl methacrylate were added to the obtained resin solution and mixed at 140 °C for 3 hours to obtain a hydrophobic oligomer having an acid value of 2.5, a number average molecular weight of 2,600, an SP value of 9.5 and a nonvolatile content of 50 %.

The same type of reaction vessel as used above was charged with 45 parts by weight of butyl diglycol and heated to 120 °C with stirring. To the reaction vessel, a mixture of 400 parts by weight of the hydrophobic oligomer, 52.6 parts by weight of styrene, 63.8 parts by weight of methyl methacrylate, 35.0 parts by weight of ethylhexyl acrylate, 30.2 parts by weight of hydroxyethyl acrylate, 18.4 parts by weight of methacrylic acid and 14 parts by weight of Kaya Ester O was added dropwise for 3 hours to polymerize, and mixing was continued. Xylene was removed by distillation under a reduced pressure to obtain a graft polymer solution having a nonvolatile content 86 %. The graft polymer had a number average molecular weight of 8,000, an acid value of 30, an hydroxyl value of 74, a ratio of hydrophobic portion / hydrophilic potion of 50,50 and a hydrophilic portion SP value of 11.4. The graft polymer was neutralized 100 % with dimethylethanolamine and diluted with water up to a nonvolatile content of 24 %. The obtained aqueous solution has a viscosity of 300 cps and a turbidity of 8 degree (kaoline).

Production Example 3

Preparation of a graft polymer (iii)

The same type of reaction vessel as Production Example 1 was charged with. 400 parts by weight of xylene and heated to 120 °C with stirring. A mixture of 121.6 parts by weight of ethylhexyl methacrylate, 110.0 parts by weight of lauryl methacrylate, 94.0 parts by weight of t-butyl methacrylate, 74.4 parts by weight of 2-hydroxyethyl methacrylate, 40 parts by weight of Kaya Ester O and 17.2 parts by weight of methacrylic acid was added dropwise for 3 hours and continued to mix for another 2 hours. Next, 0.1 part by weight of hydroquinone and 17.0 parts by weight of glycidyl methacrylate were added to the obtained resin solution and mixed at 140 °C for 3 hours to obtain a hydrophobic oligomer having an acid value of 2.5, a number average molecular weight of 2,600, an SP value of 9.5 and a nonvolatile content of 50 %.

The same type of reaction vessel as used above was charged with 45 parts by weight of butyl diglycol and heated to 120 °C with stirring. To the reaction vessel, a mixture of 400 parts by weight of the hydrophobic oligomer, 10.2 parts by weight of styrene, 38.6 parts by weight of methyl methacrylate, 82.7 parts by weight of ethyl acrylate, 37.1 parts by weight of 2-hydroxyethyl methacrylate, 31.4 parts by weight of dimethylaminoethyl methacrylate and 14 parts by weight of Kaya Ester O was added dropwise for 3 hours to polymerize, and mixing was continued. Xylene was removed by distillation under a reduced pressure to obtain a graft polymer solution having a nonvolatile content 87 %. The graft polymer had a number average molecular weight of 8,000, an hydroxyl value of 74, an amine equivalent of 2,000, a ratio of hydrophobic portion / hydrophilic portion of 50/50 and a hydrophilic portion SP value of 11.4. The graft polymer was neutralized 30 % with acetic acid and diluted with water up to a nonvolatile content of 23 %. The obtained aqueous solution has a viscosity of 500 cps and a turbidity of 3 degree (kaoline).

Production Example 4

Preparation of water-insoluble resin (1)

The same type of reaction vessel as Production Example 1 was charged with 400 parts by weight of xylene and heated to 120 °C with stirring. A mixture of 20 parts by weight of styrene, 2.6 parts by weight of lauryl methacrylate, 58.1 parts by weight of ethylhexyl acrylate, 18.6 parts by weight of 2-hydroxyethyl methacrylate, 10 parts by weight of Kaya Ester O and 0.8 parts by weight of methacrylic acid was added dropwise for 3 hours to obtain an acryl resin having an acid value of 5.0, an SP value of 9.5, a hydroxy value of 80, a number average molecular weight of 2,500 and a nonvolatile content of 75 %.

Production Example 5

Preparation of water-insoluble resin (2)

The same type of reaction vessel as Production Example 1 was charged with 400 parts by weight of xylene and heated to 120 °C with stirring. A mixture of 20 parts by weight of styrene, 35.2 parts by weight of methyl methacrylate, 25.0 parts by weight of ethylhexyl methacrylate, 18.6 parts by weight of 2-hydroxyethyl methacrylate, 5 parts by weight of Kaya Ester O and 1.23 parts by weight of methacrylic acid was added dropwise for 3 hours to obtain an acryl resin having an acid value of 8.0, an SP value of 10.4, a hydroxy value of 80, a number average molecular weight of 4,000 and a nonvolatile content of 60 %.

Production Example 6

Preparation of an aqueous resin

The same type of reaction vessel as Production Example 1 was charged with 35 parts by weight of dibutyl diglycol and heated to 120 °C with stirring. A mixture of 10 parts by weight of styrene, 40.6 parts by weight of methyl methacrylate, 21.6 parts by weight of ethylhexyl acrylate, 18.6 parts by weight of 2-hydroxyethyl methacrylate, 2.5 parts by weight of Kaya Ester O and 9.2 parts by weight of methacrylic acid was added dropwise for 3 hours to obtain an acryl resin having an acid value of 60, an SP value of 11.5, a hydroxyl value of 80 and a molecular weight of 10,000.

A water-borne varnish was prepared by mixing 135 parts by weight of the above obtained resin varnish and 9.0 parts by weight of dimethylethanolamine followed by the addition of 213 parts by weight of deionized water at 50 °C.

Example 1

A vessel was charged with 370 parts by weight of the graft polymer (i) of Production Example 1 and heated to 50 °C, to which 35 parts by weight of Cymel 732 (a melamine resin available from Mitsui Cyanamide Co., Ltd.) was slowly added with stirring and mixing was continued for 10 minutes. Then, 40 parts by weight of deionized water was added and continued to mix at 90 °C for 3 hours to obtain an aqueous dispersion having a particle size of 80 nm. The particle size was determined by a laser light scattering method with 200 folds dilution of 0.1 Kg sample.

The dispersion was kept at 50 °C for one month, but had good storage stability.

Example 2

A vessel was charged with 370 parts by weight of the graft polymer (ii) of Production Example 2 and heated to 50 °C. A mixture of 133 parts by weight of the water-insoluble polymer (1) of Production Example 4 and 70 parts by weight of a melamine resin (Cymel 732) was slowly added with stirring and continued to mix at 60 °C for 30 minutes. Then, 150 parts by weight of deionized water was added and mixing was continued at 90 °C for 10 hours to obtain an aqueous dispersion having a particle size of 0.2 micron. It had a gelation content of 40 %.

The dispersion was kept at 50 °C for one month, but had good storage stability.

Example 3

A vessel was charged with 435 parts by weight of the graft polymer (iii) of Production Example 3 and heated to 50 °C. A mixture of 167 parts by weight of the water-insoluble polymer of Production Example 5, 107 parts by weight of a melamine resin (Cymel 325 available from Mitsui Cyanamide Co., Ltd.) and a catalyst (Catalyst 4040 available from Mitsui Toatsu Co., Ltd.) was slowly added with stirring and mixing was continued for 30 minutes. Then, 240 parts by weight of deionized water was added and continued to mix at 90 °C for 6 hours to obtain an aqueous dispersion having a particle size of 0.2 micron. It had a gelation content of 50 %.

The dispersion was kept at 50 °C for one month, but had good storage stability.

Comparative Example 1

A vessel was charged with 370 parts by weight of the graft polymer (i) of Production Example 1 and heated to 50 °C, to which 35 parts by weight of Cymel 732 (a melamine resin available from Mitsui Cyanamide Co., Ltd.) was slowly added with stirring and mixing was continued for 10 minutes. Then, 40 parts by weight of deionized water was added to obtain an aqueous dispersion having a particle size of 90 nm without heating more than the curing temperature.

The dispersion was allowed to stand at 50 °C, but after one day, separation and precipitation were observed and its viscosity was also changed.

Comparative Example 2

A vessel was charged with 370 parts by weight of the graft polymer (i) of Production Example 1 and heated to 50 °C. A mixture of 133 parts by weight of the water-insoluble polymer of Production Example 4 and 70 parts by weight of a melamine resin (Cymel 732) was slowly added with stirring and mixing was continued for 30 minutes. Then, 150 parts by weight of deionized water was added to obtain an aqueous dispersion having a particle size of 0.17 micron without heating to 90 °C.

The dispersion was allowed to stand at 50 °C, but after one day, separation and precipitation were observed and its viscosity was also changed.

Example 4

A water-borne thermosetting coating composition was prepared by mixing 100 parts by weight of the aqueous dispersion of Example 2, 175 parts by weight of the aqueous varnish of Production Example 6 and a melamine resin (Cymel 303 available from Mitsui Cyanamide Co., Ltd.).

The composition was subjected to a storage stability test as generally described in Example 1, but had excellent storage stability.

Claims

1. A process for preparing a heat-stable aqueous resin dispersion in which gelled resin particles are stably dispersed in an aqueous medium, comprising
forming a resin mixture of a graft polymer and a curing agent in the aqueous medium, wherein said graft polymer has a branch chain with a molecular weight of 1,000 to 4,000 and a principal chain, and has a total number average molecular weight of 5,000 to 100,000, one of the branch chain and the principal chain is hydrophobic and has a solubility parameter of 8.0 to 11.5, the other of the branch chain and the principal chain is hydrophilic and has a solubility parameter of 10.0 to 13.0 and the solubility parameters have an absolute difference therebetween of at least 1, and, when the graft polymer is mixed in the aqueous medium, the resultant mixture has an integrating sphere turbidity of not more than 50 degree (kaoline) at a concentration of 10 to 70 % by weight and at a viscosity of 50 to 10,000 cps, and
heating said resin mixture to a curing temperature or more with stirring.
2. The process according to Claim 1 wherein said resin mixture further contains a water soluble resin.
3. The process according to Claim 2 wherein said water-insoluble resin is a resin whose solubility parameter is different from that of the hydrophobic portion of the graft polymer by not more than 2 in absolute value, and which has an acid value of not more than 20.
4. The process according to Claim 2 wherein said water-insoluble resin has a number average molecular weight of 3,000 to 10,000.
5. The process according to Claim 2 wherein said water-insoluble resin is present in an amount of 5 to 100 parts by weight based on 100 parts by weight of the graft polymer.
6. The process according to Claim 1 wherein said curing agent is a melamine resin.
7. A heat-stable aqueous resin dispersion in which gelled resin particles are stably dispersed in an aqueous medium, which is prepared by the process according to Claim 1 or 2.
8. A water-borne coating composition comprising an aqueous resin dispersion in which gelled resin particles are stably dispersed in an aqueous medium, and an amino resin, wherein said aqueous resin dispersion is prepared by

forming a resin mixture of a graft polymer and a curing agent, wherein said graft polymer has a branch chain with a number average molecular weight of 1,000 to 4,000 and a principal chain, and has a total molecular weight of 5,000 to 100,000, one of the branch chain and the principal chain is hydrophobic and has a solubility parameter of 8.0 to 11.5, the other of the branch chain and the principal chain is hydrophilic and has a solubility parameter of 10.0 to 13.0, and the solubility parameters have an absolute difference therebetween of at least 1, and, when the graft polymer is mixed in the aqueous medium, the resultant mixture has an integrating sphere turbidity of not more than 50 degree (kaoline) at a concentration of 10 to 70 % by weight and at a viscosity of 50 to 10,000 cps, and

heating said resin mixture to a curing temperature or more with stirring.

9. The water-borne coating composition according to Claim 8 wherein said resin mixture further contains a water-insoluble resin.

10. The process according to Claim 9 wherein said water-insoluble resin is a resin whose solubility parameter is different from that of the hydrophobic portion of the graft polymer by not more than 2 in absolute value, and which has an acid value of not more than 20.

11. The process according to Claim 9 wherein said water-insoluble resin has a number average molecular weight of 3,000 to 10,000.

12. The process according to Claim 9 wherein said water-insoluble resin is present in an amount of 5 to 100 parts by weight based on 100 parts by weight of the graft polymer.

13. The process according to Claim 8 wherein said curing agent is a melamine resin.